(19) Europäisches Patentamt
European Patent Office
Office européen des brevets

(11) **EP 4 671 414 A1**

(12) **EUROPEAN PATENT APPLICATION**

(43) Date of publication:
31.12.2025 Bulletin 2026/01

(21) Application number: 24184299.6

(22) Date of filing: 25.06.2024

(51) International Patent Classification (IPC):
*C25B 3/26* (2021.01)   *C25B 11/042* (2021.01)

(52) Cooperative Patent Classification (CPC):
**B01J 35/33; C01G 45/00; C25B 3/26; C25B 11/075; C25B 1/23**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Max-Planck-Gesellschaft zur Förderung der Wissenschaften e.V.**
**80539 München (DE)**

(72) Inventors:
• GAO, Yugang
  D-01187 Dresden (DE)
• WANG, Xia
  D-01069 Dresden (DE)
• FELSER, Claudia
  D-55268 Nieder-Olm (DE)

(74) Representative: **Schweitzer, Klaus et al**
**Dr. Müller Patentanwälte**
**Mühlstraße 9A**
**65597 Hünfelden (DE)**

(54) **TOPOLOGICAL WEYL SEMIMETALS FOR SWITCHING THE SELECTIVITY OF CO2 ELECTROREDUCTION BY MAGNETIC FIELD**

(57)   [Summary]

The present invention is directed to a method of controlling the selectivity of an electrocatalyst for a carbon dioxide reduction reaction ($CO_2RR$), which method comprises selecting a magnetic topological semimetal from Space Group $P6_3$, or Pm3m and applying a magnetic field ($B$) to the compound. The invention is further directed to an electrocatalytic carbon dioxide reduction cell, comprising a magnetic topological semimetal from Space Group $P6_3$, or Pm3m under a magnetic field of $\geq 50\mu T$; and the use of a magnetic field of $\geq 50\mu T$ for controlling the selectivity of an electrocatalyst for a carbon dioxide reduction reaction ($CO_2RR$).

Figure 3

# EP 4 671 414 A1

**Description**

[Background]

Topological materials are a class of materials, which exhibit unique electronic properties due to their non-trivial topology, which have shown great potential in next generation quantum storage devices and even quantum computers. In a topological Weyl semimetal, the electronic band structure near the Fermi surface features pairs of Weyl nodes, which are points where conduction and valence bands cross each other linearly. These Weyl nodes act as monopoles of Berry curvature in momentum space, leading to topologically protected Fermi arcs on the surface and chiral magnetic effects in the bulk. Interestingly, the nontrivial topological surface states (TSSs) are recently reported to be highly related to the adsorption and activation in various heterogeneous catalytic reactions, such as hydrogen evolution reaction, oxygen evolution reaction and oxygen reduction reaction etc. Thus, topological weyl semimetals also exhibit great potential in surface catalytic reaction.

As a typical surface catalytic reaction, electrocatalytic carbon dioxide reduction reaction ($CO_2RR$) is a process that aims to convert $CO_2$ into valuable chemical products like CO, HCOOH, $CH_3OH$, $CH_4$, $C_2H_4$ or $C_2H_5OH$, using electricity and a catalyst. This process holds significant promise for addressing both environmental challenges, such as reducing greenhouse gas emissions, and energy demands by providing a means to store renewable electricity in chemicals. Due to the diverse products during the reaction, the selectivity of the catalyst is one of the most important issues in this field. However, it is still challenging to obtain a high selectivity by using a catalyst. The selectivity is strongly dependent on the catalyst surface, which can control the reaction pathways, e.g. from $CO_2$ to CO or $CO_2$ to $CH_4$, by affecting the adsorption of $CO_2$ and intermediates (e.g. *COOH, *CHO). Topological weyl semimetals open up a new opportunity to improve the selectivity of electrocatalytic $CO_2$ reduction owing to their unique physical properties. Up to today, topological insulators, such as $Bi_2Se_3$ have been explored with excellent electrocatalytic $CO_2$ reduction performance[1], but that for semimetals for example is still unknown. Based on the theoretical studies, the spin configuration of semimetals can be tuned by an external magnetic field. In this case, the TSSs can also be changed with the magnetic field, which opens the possibility to control the selectivity of $CO_2$ reduction. However, related experiments to verify this process are quite limited.

[Prior Art]

WO2021215408A1 provides a carbon dioxide reduction catalyst that is used in reduction reactions of carbon dioxide and that has high methanol selectivity. The catalyst contains Au and Cu as catalyst components and ZnO as a carrier. The carbon dioxide reduction catalyst makes it possible to obtain high methanol selectivity even under the conditions of not more than 240°C and not more than 50 bar.

CN116889870A addresses the problem of providing a carbon dioxide reduction catalyst with which a hydrocarbon having 5 or more carbon atoms can be produced at a higher yield even at a high flow rate. The catalyst contains Fe and Zr as catalyst metals. Ga and Na are further included as catalyst metals, and the content of Zr in the catalyst metals is preferably greater than 0% by mass and 15% by mass or less.

WO2021008196A1 relates to a catalyst for electrocatalytic carbon dioxide reduction. The catalyst is nitrogen-doped carbon nanofiber composite iron sulfide particles. The catalyst has high electrocatalytic activity and selectivity on the carbon dioxide reduction, in particular, can significantly improve the energy efficiency for carbon dioxide utilization.

WO2021096619A1 discloses a dilute alloy catalyst for carbon dioxide reduction. The catalyst has a majority component and at least one minority component. The majority component is present in a concentration of greater than 90 atomic percent of the catalyst. The majority component is copper, and each minority component is selected from the group consisting of: a transition metal, a main group metal, a lanthanide, and a semimetal.

A variety of homogeneous and heterogeneous catalysts have been evaluated (Hori Y (2008). "Electrochemical CO2 Reduction on Metal Electrodes". Modern Aspects of Electrochemistry. Vol. 42. pp. 89-80. doi:10.1007/978-0-387-49489-0_3. ISBN 978-0-387-49488-3; Centi G, Perathoner S (2009). "Opportunities and prospects in the chemical recycling of carbon dioxide to fuels". Catalysis Today. 148 (3-4): 191-205. doi:10.1016/j.cattod.2009.07.075; Appel AM, Bercaw JE, Bocarsly AB, Dobbek H, DuBois DL, Dupuis M, et al. (August 2013). "Frontiers, opportunities, and challenges in biochemical and chemical catalysis of CO2 fixation". Chemical Reviews. 113 (8): 6621-58. doi:10.1021/cr300463y. PMC 3895110. PMID 23767781)

[Object of the Invention]

Currently, there are only few publications, which report the possibility of a change of the selectivity of topological insulators[1],[2], but the reported selectivity control is by far not sufficient to meet the requirements of practical applications. The main reason is that effective topological materials are very scarce and their topological surface states (TSSs) are difficult to control. It was, therefore, an object of the present invention to further improve the selectivity and to develop more effective topological crystals for $CO_2RR$ by controlling TSSs.

[Summary of the Invention ]

The present invention provides a solution to the above object and is directed to a method of controlling the selectivity of an electrocatalyst for a carbon dioxide reduction reaction ($CO_2RR$), which method comprises:

- selecting a magnetic topological semimetal which crystallizes in Space Group $P6_3$, or Pm3m and
- applying a magnetic field to the compound.

The magnetic topological semimetals are preferably selected from compounds having the formula $A_xB$ (I) (x=1, 2, 3) or $A_xB_yC$ (II) (x, y independently from one another =1, 2, 3), wherein

in formula (I)

A is selected from a transition metal of IUPAC group 4, 5, 6, 7, 11 or 12; and

B is selected from an element of IUPAC group 2, 13, 14, 15 or 16; and

in formula (II)

A is selected from a transition metal of IUPAC group 4, 5, 6, 7, 11 or 12; and

B is selected from an element of IUPAC group 2, 10, 12, 13, 14 or 15; and

C is selected from an element of IUPAC group 13, 14, 15, or 16.

[Brief Description of the Drawings]

**Figure 1:**

a) Illustrations of the crystal structures

b) magnetic structure for $Mn_3X$, $Mn_3Ge$ and $Mn_3Sn$. Purple and blue spheres represent Mn atoms lying in the z=0 and z=c/2 planes, respectively.

**Figure 2:**

a) Laue X-ray diffraction patterns of $Mn_3Ge$,

b) Laue X-ray diffraction patterns of $Mn_3Sn$.

**Figure 3:**

a) Linear sweeping voltammetry (LSV) polarization curves of original $Mn_3Ge$, $Mn_3Ge$ with 0.1T, $Mn_3Ge$ after magnetization, $Mn_3Ge$ with 4T, respectively. The current density is normalized with the geometric area of the electrode.

b) LSV curves of reference electrode Ge, Ge with 0.1T, Mn and Mn with 0.1T, respectively.

c) Faradaic efficiencies comparison of electrocatalytic $CO_2RR$ for these electrodes at - 1.4V vs Ag/AgCl.

d) Faradaic efficiencies of $Mn_3Ge$ electrode with 0.1T at different potentials.

**Figure 4:**

a) Linear sweeping voltammetry (LSV) polarization curves of original $Mn_3Sn$ and $Mn_3Sn$ with 0.1T, respectively. The current density is normalized with the geometric area of the electrode.

b) Faradaic efficiencies comparison of electrocatalytic $CO_2RR$ for these electrodes at - 1.4V vs Ag/AgCl.

[Definition of terms]

"Selectivity" means the capability of the $CO_2RR$ to predominantly produce a pre-defined product. It also refers to the property of a $CO_2RR$-catalyst to have an impact on the ratio of reaction products of the $CO_2RR$, ideally on which product is predominantely generated by the $CO_2RR$.

"Controlling" means favoring a pre-determined reaction path of the $CO_2RR$ over (an)other possible reaction path(s). It may also mean changing the product ratio of the $CO_2RR$.

"Predominantely" means to an amount of more than 50%, preferably more than 60% and most preferred to more than 70% of the corresponding total amount. For example, the term may apply to the molar ratio of reaction products; in this case, the percentage is a molar percentage.

"Applying a magnetic field" means applying a magnetic field, that is larger than the magnetic field of the earth (which is about $65 \times 10^{-6}$ mT).

Negative Bravais-Miller indices are either indicated as e.g. -1 or 1. Likewise negative space group symmetry operations are either indicated as e.g. -3 or 3.

[Detailed Description of the Invention]

It is generally believed that the $CO_2RR$ proceeds on the surface of electrocatalysts through several possible carbon intermediates, such as $CO_2^*$, $COOH^*$, and $CHO^*$ associated with multiple sequential proton-coupled electron transfers processes. The Sabatier principle, which states that the adsorption binding energy between the catalytic active sites and the reactive intermediates should be neither too strong nor too weak, has been widely used as the key criterion in designing and screening electrocatalytic materials for the $CO_2$ electrocatalysis in the past. Consequently, a volcano plot has been constructed to indicate the activities of various electrocatalysts as a function of their binding energy, in which the volcano peak position represents the best catalyst with optimal bonding strength. Further research investigation extracted different electronic structure indicators, such as d-band position, to establish structure-catalytic performance relationships, predict the performance of new catalysts, and thus accelerating the rational design of catalysts by bypassing time-consuming experimental trials. Although significant progress has been made through conventional structure engineering strategies (doping, sizes, facets, morphologies, surface modifications) and the role of spin configuration[2] of topological materials in the $CO_2RR$ process, the selectivity of the $CO_2RR$, i.e. the capability of the $CO_2RR$ to predominately produce a pre-defined product or the capability of a $CO_2RR$-catalyst to impact the ratio of reaction products of the $CO_2RR$ has not yet satisfactorily been addressed.

It has been predicted that the spin configuration of topological weyl semimetals could be tuned by a magnetic field. In this case, the TSSs of weyl semimetals could also be changed. Based on these theoretical studies, the present invention is based on the finding that a magnetic field can be used to control the selectivity of $CO_2RR$.

Unlike traditional catalysts, the method according to the present invention uses magnetic topological semimetals from Space Group $P6_3$, or $Pm\overline{3}m$, which are compounds having the formula $A_xB$ (I) (x=1, 2, 3) or $A_xB_yC$ (II) (x, y independently from one another =1, 2, 3).

In formula (I)

A is selected from a transition metal of IUPAC group 4, 5, 6, 7, 11 or 12; and

B is selected from an element of IUPAC group 2, 13, 14, 15 or 16;

preferably,

A is selected from Mn, V, Nb, Ta, Cu, Zn, Ag or Au, and

B is preferably selected from Mg, Sn, Al, Ga, Si, and Ge.

More preferred, the magnetic topological semimetals with the formula $A_xB$ crystallizing in Space Group 194 ($P6_3$)

are selected from the group consisting of $Mn_3Ge$, $Mn_3Sn$, $Mn_3Ga$, MuSe, MnTe.

In formula (II)

A is selected from a transition metal of IUPAC group 4, 5, 6, 7, 11 or 12; and

B is selected from an element of IUPAC group 2, 10, 12, 13, 14 or 15; and

C is selected from an element of IUPAC group 13, 14, 15, or 16.

In a preferred embodiment

A is selected from Mn, V, Nb, Ta, Cu, Zn, Ag or Au, and

B is selected from Ba, Ca, Sr, Ga, Sn, Ni, Zn, Bi, Sb, P or As, and

C is selected from S, Se, C, Te, Si, Ge, or N.

More preferred the magnetic topological semimetals with the formula of $A_xB_yC$ crystallizing in Space Group 221 (Pm3m) are selected from the group consisting of $Mn_3GaC$, $Mn_3GaN$, $Mn_3SnC$, $Mn_3SnN$, $Mn_3ZnC$, $Mn_3ZnN$, $Mn_3GeC$, $Mn_3GeN$, $Mn_3InC$, $Mn_3InN$, $Mn_3CuN$, $Mn_3CuC$, $Mn_3NiC$, $Mn_3NiN$, preferably selected from the group consisting of $Mn_3GaC$, $Mn_3ZnC$, $Mn_3GeC$, $Mn_3InC$ and $Mn_3CuN$.

As a crystal these compounds can be used directly as an electrode and catalyst for $CO_2RR$; in powder form, they can e.g. be deposited onto a conductive electrode.

The magnetic field (B), which is applied to the magnetic topological semimetal, is a magnetic field, which is larger than the magnetic field of the earth (which is about $65 \times 10^{-6}$ mT). Preferably, the strength of the applied magnetic field is $\geq 50\mu T$ and preferably $\leq 15$ T. More preferred the strength of the applied magnetic field is $\geq 0.1$ T and preferably $\leq 12$ T. Most preferred the strength of the applied magnetic field is between 0.1 T and 2.0 T, preferably between 0.1 T and 1.5 T, and more preferred between 0.1 T and 1.0 T.

Preferably, the magnetic field is applied to a single crystal of the magnetic topological semimetal. It has been found that when the direction of the magnetic field is applied along the out-plane facets of the magnetic topological semimetals $A_xB$ (I) and $A_xB_yC$ (II) of Space Group $P6_3$, or $Pm\overline{3}m$, such as the {0001} facets, the $CO_2RR$ selectivity of the topological crystal responds only weakly to the magnetic field. But when the direction of the magnetic field is applied along in-plane facets, such as {2 -1 -1 0}, {-2 1 1 0}, {0 -1 1 0}, {0 1 -1 0}, {-1 2 -1 0}, {1 -2 1 0}, {1 1 -2 0}, {-1 -1 2 0}, {1 0 -1 0}, {-1 0 1 0}, {-1 1 0 0} or {1 -1 0 0}, the $CO_2RR$ selectivity of crystal responds strongly to the magnetic field. Among these in-plane facets, the selectivity responds best to the magnetic field when the field is orientated along the {2 -1 -1 0}, {0 1 -1 0} or {-1 2 -1 0} facets.

For example, it has been found that when one uses a magnetic field of more than 0.1 T (~0.1T-12T) along the {2 -1 -1 0} direction of a $Mn_3Ge$ crystal, the electrode will produce more $CH_4$. And when the magnetic field is applied along the {0 1 -1 0} direction of the $Mn_3Ge$ crystal, it will produce more CO. As the magnetic field strength increases, the degree of selectivity increases even more. For example, when the strength of the magnetic field (B) is 0.1 T, the selectivity of CO and $CH_4$ is 20% and 70%. And when B increases to 1.0 T, the selectivities of CO and $CH_4$ will change to 10 and 80%.

Likewise, when a magnetic field of more than 0.1 T (~0.1T-12T) is applied along the {110} direction of a $Mn_3GeC$ crystal, the electrode will produce more $CH_4$. And when the magnetic field is applied along the {101} direction of the $Mn_3GeC$ crystal, it will produce more CO. As the magnetic field strength increases, the degree of selectivity increases even more. For example, when the strength of the magnetic field (B) is 0.1 T, the selectivity of CO and $CH_4$ is 30% and 50%. And when B increases to 1.0 T, the selectivities of CO and $CH_4$ will change to 20 and 70%.

Aside from the above described method, the present invention also relates to an electrocatalytic carbon dioxide reduction cell, comprising a magnetic topological semimetal from Space Group $P6_3$, or Pm3m under a magnetic field of $\geq 50\mu T$. The above described preferred embodiments relating e.g. to the semimetals, the magnetic field, etc. apply *mutatis mutandis* to the electrocatalytic carbon dioxide reduction cell.

Moreover, the present invention also relates to the use of a magnetic field of $\geq 50\mu T$ for controlling the selectivity of an electrocatalyst for a carbon dioxide reduction reaction ($CO_2RR$). Likewise, the above described preferred embodiments relating e.g. to the semimetals, the magnetic field, etc. apply *mutatis mutandis* to the use of the magnetic field.

The present invention provides a series of experiments, which demonstrate that a magnetic field applied to a magnetic topological semimetal can switch the selectivity of $CO_2RR$.

Method of manufacture

For the single-crystal growth, stoichiometric quantities of pure elements can be weighed and premelted in an alumina crucible in an induction furnace. The resulting ingot can then be ground and put in an alumina crucible, which in turn can be sealed in a quartz ampule. The single crystal can be grown e.g. using the Bridgman-Stockbarger technique. The growth temperature can be controlled e.g. at the bottom of the ampule. The material is heated up to 900-1000°C, preferably 950-990°C, more preferred up to about 980°C. It may remain at that temperature for 30 minutes to 5 hours, preferably for 45 minutes to 2 hours and more preferred for about 1 hour to ensure homogeneity of the melt, and is then cooled down slowly to 700-800°C, preferably 720-770°C, more preferred to about 740°C. The sample may then be annealed at the cool-down temperature for 5-25 hours, preferably 10-20 hours and more preferred for about 15 hours and may then be quenched to room temperature in an inert gas atmosphere, e.g. argon gas.

General properties of the catalysts

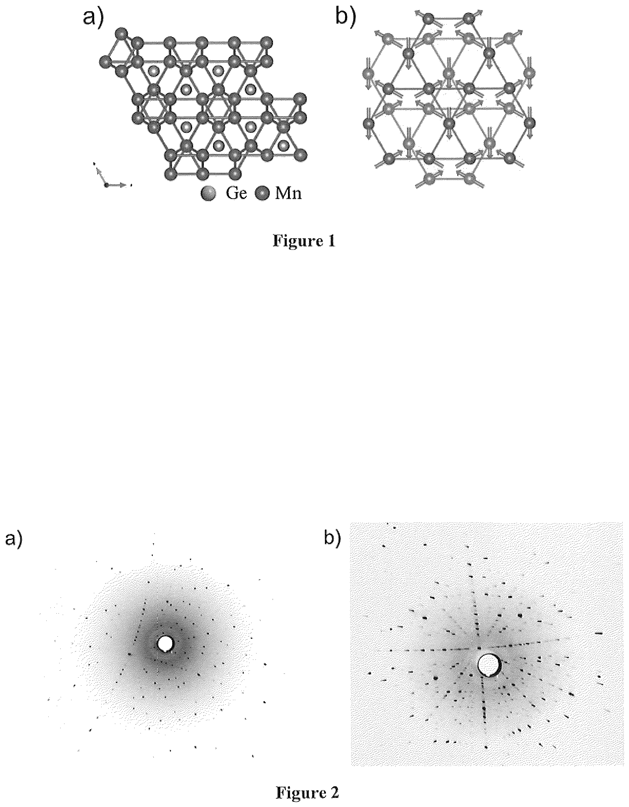

The $A_xB$ compounds share the same layered hexagonal lattice (space group $P6_3/mmc$, No. 194). Inside a layer, the A-atoms form a Kagome-type lattice with mixed triangles and hexagons and the B-atoms are located at the centers of these hexagons as shown in Figure 1a. Each A-atom carries a magnetic moment; in $Mn_3Sn$ the moment is 3.2 $\mu$B and in $Mn_3Ge$ 2.7 $\mu$B. The ground magnetic state is a noncollinear AFM state, where A-element moments align inside the ab plane and form 120° angles with neighboring moment vectors, as shown in Figure 1b. Along the c axis, stacking two layers leads to the primitive unit cell. Given the magnetic lattice, these two layers can be transformed into each other by inversion symmetry or with a mirror reflection ($M_y$) adding a half-lattice (c/2) translation, i.e., a nonsymmorphic symmetry.

[Examples]

The invention is now explained in more detail with reference to examples.

For the synthesis of weyl semimetal crystals of $Mn_3Ge$ and $Mn_3Sn$, stoichiometric quantities of pure elements were weighed and premelted in an alumina crucible in an induction furnace. The ingot was ground and put in an alumina crucible, which was sealed in a quartz ampule. The single crystal was grown using the Bridgman-Stockbarger technique. The growth temperature was controlled at the bottom of the ampule. The material was heated up to 980°C, remained there for 1 hour to ensure homogeneity of the melt, and was cooled down slowly to 740°C. The sample was annealed at 740°C for 15 hours and then quenched to room temperature in argon gas.

High quality bulk single crystals of $Mn_3Ge$ and $Mn_3Sn$ were grown from the melt using the vertical Bridgman crystal growth technique. The crystal symmetry was confirmed by the Laue X-ray diffraction. $Mn_3Ge$ and $Mn_3Sn$ all display well-ordered and symmetric diffraction spots, which confirmed the good quality of the single crystals (Fig.2a-b). Based on the analysis above, perfect single crystals of $Mn_3Ge$ and $Mn_3Sn$ with layered hexagonal lattice in space group $P6_3/mmc$ were synthesized.

**Electrocatalytic selectivity**

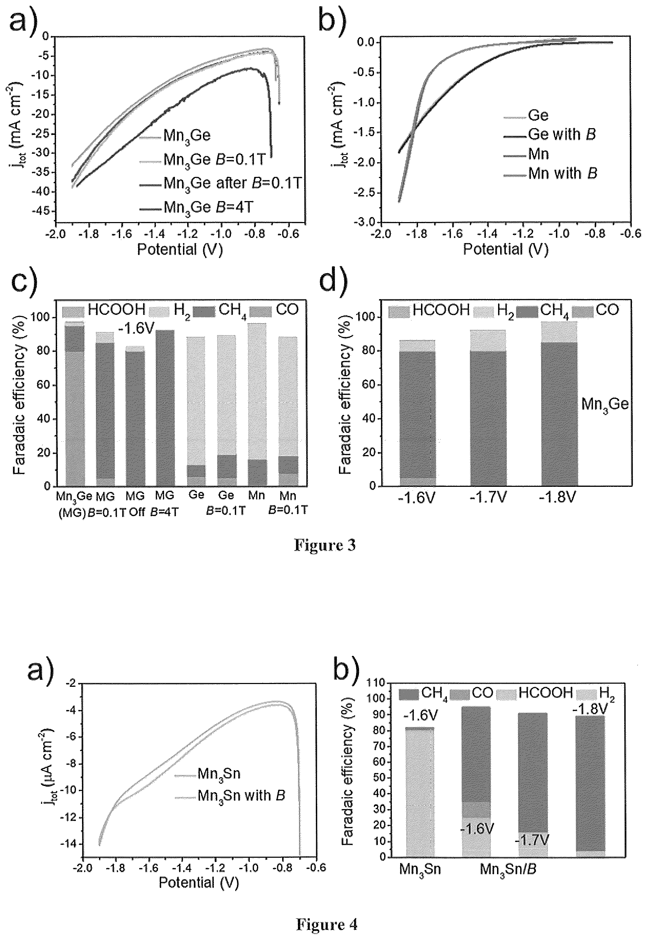

The $CO_2RR$ selectivity of $Mn_3Ge$ and $Mn_3Sn$ were then examined in a $CO_2$-saturated 0.5 M $KHCO_3$ solution by using the bulk single crystals as the electrocatalysts directly. High-purity diamagnetic Mn and Ge electrodes are used as reference samples. Fig. 3a displays the linear sweep voltammograms (LSV) for all of the $Mn_3Ge$ single crystal samples at a scan rate of 50 mV s$^{-1}$. Fig. 3b shows the LSV curves for the reference samples at a scan rate of 50 mV s$^{-1}$. Note, the current densities of $Mn_3Ge$ in Fig. 3a were normalized to the geometric area of the single crystals. It can be seen that the current densities of these samples did not change much with the application of a magnetic field. Then, the selectivity of these samples at -1.4 V vs Ag/AgCl were calculated in Fig. 3b. It shows that the selectivity (faradaic efficiencies, FEs) of original $Mn_3Ge$ crystal for CO and $CH_4$ production are 78% and 15%, respectively. But after applying a magnetic field, the $FE_{CO}$ and $FE_{CH4}$ values are greatly tuned to 5% and 80%, respectively. At the same time, for the reference electrode, the magnetic field did not change much of the selectivity, indicating that the pure magnetic field has no significant effect on the selectivity. Thus, we found that the magnetic field can switch the selectivity of magnetic topological semimetals from CO to $CH_4$. As seen in Fig. 3d, we also calculated the selectivity of $Mn_3Ge$ single crystals at different potentials under a magnetic field, showing that magnetic field can switch the selectivity of $CO_2RR$ at various potentials. For a $Mn_3Sn$ crystal, we checked its electrocatalytic $CO_2RR$ performance in Fig. 4. As seen in Fig. 4a, LSV curves of a $Mn_3Sn$ crystal are measured. The magnetic field has obviously not changed the current densities of the electrode, but the selectivity has been changed. As seen in Fig. 4b, the original $Mn_3Sn$ crystal produces more HCOOH, but after applying the magnetic field, the products are changed to $CH_4$. Thus, it is found that the magnetic field can switch the $CO_2RR$ selectivity of magnetic topological semimetals, in this case weyl antiferromagnetic crystals.

**Materials characterization**

A white beam backscattering Laue X-ray diffraction was performed to check the single crystallinity of $Mn_3Ge$ and $Mn_3Sn$ at room temperature.

**Electrochemical measurements**

The electrochemical measurements were carried out on a VMP3 electrochemical workstation using a standard three-electrode configuration. A carbon rod electrode, and an Ag/AgCl electrode were used as the counter electrode and reference electrode, respectively. The bulk single crystals were used directly as the working electrode. In detail, the $CO_2RR$ selectivity was conducted in the $CO_2$-saturated 0.5 M $KHCO_3$ solution within 3 hours.

The Nernst equation was used as the conversion formula for converting potentials from the Ag/AgCl scale to the RHE scale:

$$E_{RHE} = E_{Ag/AgCl} + 0.059 \times pH + 0.197 \qquad (1)$$

**Products determination**

The gas products from the cathode compartment were examined with a gas chromatograph (GC) equipped with a TDX-01 column with a flame ionization detector (FID) and a $H_2$-detection GC (ShiweipxGC-7806) with a thermal conductivity detector (TCD). The liquid products are detected by Nuclear Magnetic Resonance (NMR).

The faradaic efficiency (FE) was calculated by the following equation

$$FE_{C2H4} = \frac{\alpha nF}{Q} = \frac{2nF}{It} \qquad (2)$$

Where $\alpha$ is the number of the electrons transferred for CO, F is the Faraday constant, Q is the charge, I is the current, t is the running time and n is the total amount of CO (in moles).

[References]

[1] a) X. Kong, Z. Liu, Z. Geng, A. Zhang, Z. Guo, S. Cui, C. Xia, S. Tan, S. Zhou, Z. Wang, J. Zeng, J. Am. Chem. Soc. 2024, 146, 6536-6543; b) H. Xie, T. Zhang, R. Xie, Z. Hou, X. Ji, Y. Pang, S. Chen, M. M. Titirici, H. Weng, G. Chai, Adv. Mater. 2021, 33, e2008373,
[2] a) H. Pan, X. Jiang, X. Wang, Q. Wang, M. Wang, Y. Shen, J. Phys. Chem. Lett. 2020, 11, 48-53; b) J. Hao, S. Xie, Q. Huang, Z. Ding, H. Sheng, C. Zhang, J. Yao, CCS Chemistry 2023, 5, 2046-2058.

**Claims**

1. Method of controlling the selectivity of an electrocatalyst for a carbon dioxide reduction reaction ($CO_2RR$), which method comprises:

    - selecting a magnetic topological semimetal from Space Group $P6_3$, or Pm3m and
    - applying a magnetic field (*B*) to the compound.

2. Method according to claim 1, wherein the magnetic topological semimetal is selected from compounds of the formula $A_xB$ (I) with x=1, 2, 3 crystallizing in Space Group 194 ($P6_3$) or $A_xB_yC$ (II) with x, y independently from one another =1, 2, 3 crystallizing in Space Group Pm3m, wherein

    in formula (I)

        A is selected from a transition metal of IUPAC group 4, 5, 6, 7, 11 or 12; and
        B is selected from an element of IUPAC group 2, 13, 14, 15 or 16; and

in formula (II)

A is selected from a transition metal of IUPAC group 4, 5, 6, 7, 11 or 12; and
B is selected from an element of IUPAC group 2, 10, 12, 13, 14 or 15; and
C is selected from an element of IUPAC group 13, 14, 15, or 16.

3. Method according to claim 1 or 2, wherein the magnetic topological semimetals with the formula $A_xB$ crystallizing in Space Group 194 ($P6_3$) are selected from the group consisting of $Mn_3Ge$, $Mn_3Sn$, $Mn_3Ga$, MnSe and MnTe.

4. Method according to claim 1 or 2, wherein the magnetic topological semimetals with the formula of $A_xB_yC$ crystallizing in Space Group 221 ($Pm\overline{3}m$) are selected from the group consisting of $Mn_3GaC$, $Mn_3GaN$, $Mn_3SnC$, $Mn_3SnN$, $Mn_3ZnC$, $Mn_3ZnN$, $Mn_3GeC$, $Mn_3GeN$, $Mn_3InC$, $Mn_3InN$, $Mn_3CuN$, $Mn_3CuC$, $Mn_3NiC$ and $Mn_3NiN$, preferably selected from the group consisting of $Mn_3GaC$, $Mn_3ZnC$, $Mn_3GeC$, $Mn_3InC$ and $Mn_3CuN$.

5. Method according to one of claims 1-4, wherein the magnetic field ($B$), is $\geq 50\mu T$.

6. Method according to one of claims 1-5, wherein the magnetic field is applied along in-plane facets.

7. Method according to claim 6, wherein the magnetic field is applied along {2 -1 -1 0}, {-2 1 1 0}, {0 -1 1 0}, {0 1 -1 0}, {-1 2 -1 0}, {1 -2 1 0}, {1 1 -2 0}, {-1 -1 2 0}, {1 0 -1 0}, {-1 0 1 0}, {-1 1 0 0} or {1 -1 0 0}.

8. Method according to claim 6 or 7, wherein the magnetic field is applied along {2 -1 -1 0}, {0 1 -1 0} or {-1 2 -1 0}.

9. Method according to one of claims 1-8, wherein a crystal of a compound (I) or (II) is used directly as an electrode for $CO_2RR$.

10. Method according to one of claims 1-8, wherein a powder of a compound (I) or (II) is deposited onto a conductive electrode and used as an electrode for $CO_2RR$.

11. Electrocatalytic carbon dioxide reduction cell, comprising a magnetic topological semimetal from Space Group $P6_3$, or Pm3m under a magnetic field of $\geq 50\mu T$.

12. Electrocatalytic carbon dioxide reduction cell according to claim 11, wherein the magnetic topological semimetal is selected from compounds of the formula $A_xB$ (I) with x=1, 2, 3 crystallizing in Space Group 194 ($P6_3$) or $A_xB_yC$ (II) with x, y independently from one another =1, 2, 3 crystallizing in Space Group Pm3m, wherein

in formula (1)

A is selected from a transition metal of IUPAC group 4, 5, 6, 7, 11 or 12; and
B is selected from an element of IUPAC group 2, 13, 14, 15 or 16; and

in formula (II)

A is selected from a transition metal of IUPAC group 4, 5, 6, 7, 11 or 12; and
B is selected from an element of IUPAC group 2, 10, 12, 13, 14 or 15; and
C is selected from an element of IUPAC group 13, 14, 15, or 16.

13. Electrocatalytic carbon dioxide reduction cell according to claim 11 or 12, wherein the magnetic field is applied along in-plane facets.

14. Electrocatalytic carbon dioxide reduction cell according to claim 13, wherein the magnetic field is applied along {2 -1 -1 0}, {-2 1 1 0}, {0 -1 1 0}, {0 1 -1 0}, {-1 2 -1 0}, {1 -2 1 0}, {1 1 -2 0}, {-1 -1 2 0}, {1 0 -1 0}, {-1 0 1 0}, {-1 1 0 0} or {1 -100}.

15. Use of a magnetic field of $\geq 50\mu T$ for controlling the selectivity of an electrocatalyst for a carbon dioxide reduction reaction ($CO_2RR$).

a)    b)

Ge ● Mn

Figure 1

a)    b)

Figure 2

Figure 3

Figure 4

**EUROPEAN SEARCH REPORT**

Application Number

EP 24 18 4299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KONG XIANGDONG ET AL: "Experimental Demonstration of Topological Catalysis for CO 2 Electroreduction", JOURNAL OF THE AMERICAN CHEMICAL SOCIETY, vol. 146, no. 10, 13 March 2024 (2024-03-13), pages 6536-6543, XP093233326, ISSN: 0002-7863, DOI: 10.1021/jacs.3c11088 Retrieved from the Internet: URL:https://pubs.acs.org/doi/pdf/10.1021/jacs.3c11088> | 15 | INV. C25B3/26 C25B11/042 |
| A | * abstract; figures 1-4 * | 1-14 | |

-----

TECHNICAL FIELDS SEARCHED (IPC)

C25B

The present search report has been drawn up for all claims

| Place of search | Date of completion of the search | Examiner |
|---|---|---|
| The Hague | 16 December 2024 | Rausch, Elisabeth |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021215408 A1
- CN 116889870 A
- WO 2021008196 A1
- WO 2021096619 A1

**Non-patent literature cited in the description**

- **HORI Y**. Electrochemical CO2 Reduction on Metal Electrodes. *Modern Aspects of Electrochemistry*, 2008, vol. 42, ISBN 978-0-387-49488-3, 89-80
- **CENTI G** ; **PERATHONER S**. Opportunities and prospects in the chemical recycling of carbon dioxide to fuels. *Catalysis Today*, 2009, vol. 148 (3-4), 191-205
- **APPEL AM** ; **BERCAW JE** ; **BOCARSLY AB** ; **DOBBEK H** ; **DUBOIS DL** ; **DUPUIS M et al.** Frontiers, opportunities, and challenges in biochemical and chemical catalysis of CO2 fixation. *Chemical Reviews*, August 2013, vol. 113 (8), 6621-58
- **X. KONG** ; **Z. LIU** ; **Z. GENG** ; **A. ZHANG** ; **Z. GUO** ; **S. CUI** ; **C. XIA** ; **S. TAN** ; **S. ZHOU** ; **Z. WANG**. *J. Am. Chem. Soc.*, 2024, vol. 146, 6536-6543
- **H. XIE** ; **T. ZHANG** ; **R. XIE** ; **Z. HOU** ; **X. JI** ; **Y. PANG** ; **S. CHEN** ; **M. M. TITIRICI** ; **H. WENG** ; **G. CHAI**. *Adv. Mater.*, 2021, vol. 33, e2008373
- **H. PAN** ; **X. JIANG** ; **X. WANG** ; **Q. WANG** ; **M. WANG** ; **Y. SHEN**. *J. Phys. Chem. Lett.*, 2020, vol. 11, 48-53
- **J. HAO** ; **S. XIE** ; **Q. HUANG** ; **Z. DING** ; **H. SHENG** ; **C. ZHANG** ; **J. YAO**. *CCS Chemistry*, 2023, vol. 5, 2046-2058